# EUROPEAN PATENT SPECIFICATION

(11) **EP 3 401 596 B1**
(45) Date of publication and mention of the grant of the patent: **06.05.2020**
(21) Application number: 18171667.1
(22) Date of filing: 09.05.2018
(51) Int. Cl.: F23J 15/02, B01D 46/32

(54) **CONTINUOUS FILTERING SYSTEM COMPRISING A MOVING BED PARTICLE LAYER WITH ADJUSTABLE THICKNESS OF FILTERING LAYER**
SYSTEM ZUR KONTINUIERLICHEN FILTRIERUNG MIT EINER WANDERBETTPARTIKELSCHICHT MIT ANPASSBARER DICKE DER FILTRATIONSSCHICHT
SYSTÈME DE FILTRAGE CONTINU AVEC UNE COUCHE DE PARTICULES À LIT MOBILE RÉGLABLE EN ÉPAISSEUR DE COUCHE DE FILTRAGE

(30) Priority: 11.05.2017 CN 201710329784
(43) Date of publication of application: 14.11.2018
(73) Proprietor: University of Science & Technology Beijing, Haidian District Beijing 100083 (CN)
(72) Inventor: Yin, Shaowu, Beijing, 100083 (CN); Wang, Li, Beijing, 100083 (CN); Liu, Chuanping, Beijing, 100083 (CN); Tong, Lige, Beijing, 100083 (CN)
(74) Representative: Dargiewicz, Joanna

(56) References cited:
- JP-A- S5 849 423
- US-A- 3 685 262
- US-A- 4 248 612
- US-A- 4 324 570
- US-A1- 2012 213 675

## Description

### TECHNICAL FIELD

The disclosure relates to the field of filtering and purifying technology for dust gas, in particular to a continuous filtering system comprising a moving bed particle filtering layer with adjustable thickness of filtering layer.

### BACKGROUND

In recent years, the recycling of waste heat and purification of high temperature coal gas and flue gas in high energy consumption and high emission industries, such as metallurgy, chemical industry and building materials, has an important role in energy saving and emission reduction in China. The high temperature coal gas and flue gas have the characteristics of complex composition, high dust content, corrosiveness and large variations in working conditions and so on, which make equipments to recycle waste heat and purify coal gas and flue gas have such bottlenecks as blocking of filtering material and difficulty of regeneration, low efficiency of waste heat recycling and purification that should be solved quickly. US2012213675A1 discloses a compact two-stage granular moving-bed apparatus including a vessel, a flow-corrective element, and a filter material supplying part, the vessel including a hollow interior, a gas outlet, a first media outlet and a second media outlet. The flow-corrective element divides the hollow interior into a first channel and a second channel. The filter material supplying part has a first provider for providing a first granular material flowing through the first channel and a second provider for providing a second granular material flowing through the second channel, wherein a vertical level of each first and second provider is adjustable so that a first flow path that an exhaust gas flows through the first granular material and a second flow path that the exhaust gas flow through the second granular material is respectively capable of being controlled.

### SUMMARY

The technical problem to be solved by the invention is to provide a continuous filtering system comprising a moving bed particle filtering layer with adjustable thickness of filtering layer, which can improve purification effect.

In order to solve the above technical problems, a continuous filtering system according to the appended independent claim 1 is provided. Further detailed characteristics and advantages are described in the dependent claims.

Preferably, a charging bell is arranged below the inlet for filtering particles.

Preferably, an aggregate channel is arranged below the second inclined filtering channel.

Preferably, the first filtering mouth for flue gas and the second filtering mouth for flue gas are correspondingly arranged at both sides of the sidewall of the first inclined filtering channel and the sidewall of the second inclined filtering channel.

Preferably, the central axis of the feeding channel is in the same line with the central axis of the aggregate channel, the central axis of the longitudinal filtering channel is not in the same line with the central axis of the feeding channel, and the feeding channel and the aggregate channel are arranged at the same side of the longitudinal filtering channel.

Preferably, the adjustment baffle is movable in an upward and downward direction to adjust the height of the longitudinal filtering channel, that is, the thickness of the filtering layer.

Preferably, the first filtering mouth for flue gas and the second filtering mouth for flue gas are correspondingly arranged at the same side of the sidewall of the first inclined filtering channel and the sidewall of the second the inclined filtering channel.

Preferably, the central axis of the feeding channel, the central axis of the longitudinal filtering channel and the central axis of the aggregate channel are not in the same line, and the feeding channel and the aggregate channel are arranged at both sides of the longitudinal filtering channel.

Preferably, the first inclined filtering channel and the second inclined filtering channel belong to the repose angle self-configuring gas-particle interface, which can reduce the filtering rate of dust gas.

Preferably, the first filtering mouth for flue gas is an inlet for flue gas, and the second filtering mouth for flue gas is an outlet for purified gas.

Preferably, the first filtering mouth for flue gas is an outlet for purified gas, and the second filtering mouth for flue gas is an inlet for flue gas.

The beneficial effects of the above technical scheme are as follows:
The above scheme is simple in structure, convenient in operation, adjustable in the thickness of the particle layer, having no such components as backstop, baffle, orifice plate, and suitable for the continuous filtering system and method for the moving bed particle layer with wide temperature range, high filtering efficiency, low filtering pressure and continuous stable operation.

### BRIEF DESCRIPTION OF THE DRAWINGS

Fig. 1 is a structural schematic diagram of the continuous filtering system comprising a moving bed particle layer with adjustable thickness of filtering layer.
Fig. 2 is a structural schematic diagram of the continuous filtering system comprising a moving bed particle layer with adjustable thickness of filtering layer.
Fig. 3 is a structural schematic diagram of the continuous filtering system comprising a moving bed particle layer with adjustable thickness of filtering layer.
Fig. 4 is a structural schematic diagram of the continuous filtering system comprising a moving bed particle layer with adjustable thickness of filtering layer.
Fig. 5 is a structural schematic diagram of the continuous filtering system comprising a moving bed particle layer with adjustable thickness of filtering layer.

### [symbol description of major component]

1. feeding channel;
2. first inclined filtering channel;
3. longitudinal filtering channel;
4. second inclined filtering channel;
5. aggregate channel;
6. inlet for filtering particles;
7. adjustment baffle;
8. first filtering mouth for flue gas;
9. second filtering mouth for flue gas;
10. discharge channel;
11. discharge valve;
12. charging bell;
13. filtering particles.

### DETAILED DESCRIPTION

In order to make the technical problems, technical schemes and advantages of the disclosure more clear, the following detailed description will be carried out in combination with the accompanying drawings and specific embodiment.

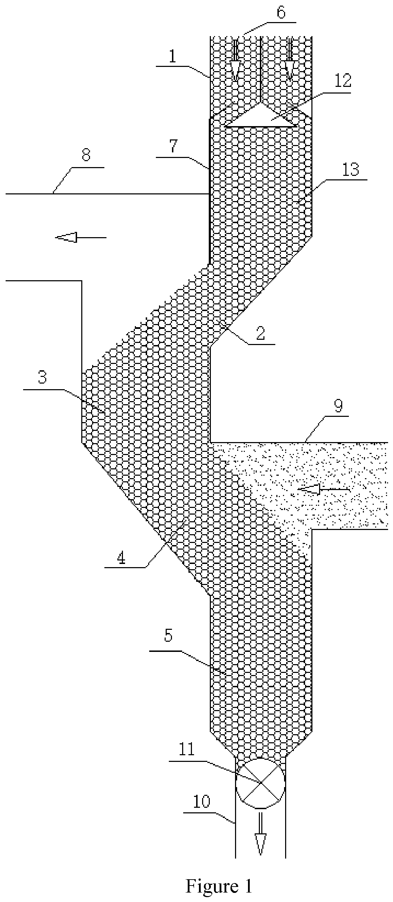

As shown in Fig.1, the continuous filtering system comprising a moving bed particle layer with adjustable thickness of filtering layer in the embodiment of the present disclosure includes: a feeding channel 1, a first inclined filtering channel 2, a longitudinal filtering channel 3, a second inclined filtering channel 4 and an aggregate channel 5; wherein the bottom of the feeding channel 1 is connected tois connected to the top of the first inclined filtering channel 2; the bottom of the first inclined filtering channel 2 is connected to the top of the longitudinal filtering channel 3; the bottom of the longitudinal filtering channel 3 is connected to the top of the second inclined filtering channel 4, and the bottom of the second inclined filtering channel 4 is connected to the top of the aggregate channel 5;
an inlet for filtering particles 6 is arranged at the top of the feeding channel 1, an baffle to adjust particle thickness 7 is arranged at the bottom of one side of the feeding channel 1 near the longitudinal filtering channel 3, a first filtering mouth for flue gas 8 and a second filtering mouth for flue gas 9 are correspondingly arranged at the sidewall of the first inclined filtering channel 2 and the sidewall of the second inclined filtering channel 4, a discharge channel 10 is arranged at the bottom of the aggregate channel 5, and a discharge valve 11 is arranged within the discharge channel 10;
the feeding channel 1, the first inclined filtering channel 2, the longitudinal filtering channel 3, the second inclined filtering channel 4 and the aggregate channel 5 are flowingly filled with filtering particles 13. Preferably, a charging bell 12 is arranged below the inlet for filtering particles 6.

Wherein, the first filtering mouth for flue gas and the second filtering mouth for flue gas are correspondingly arranged at two sides of the sidewall of the first inclined filtering channel and the sidewall of the second inclined filtering channel; the central axis of the feeding channel is in the same line with the central axis of the aggregate channel, the central axis of the longitudinal filtering channel is not in the same line with the central axis of the feeding channel, and the feeding channel and the aggregate channel are arranged at the same side of the longitudinal filtering channel; the first smoke filter for flue gas is an outlet for purified gas, and the second filtering mouth for flue gas is an inlet for flue gas.

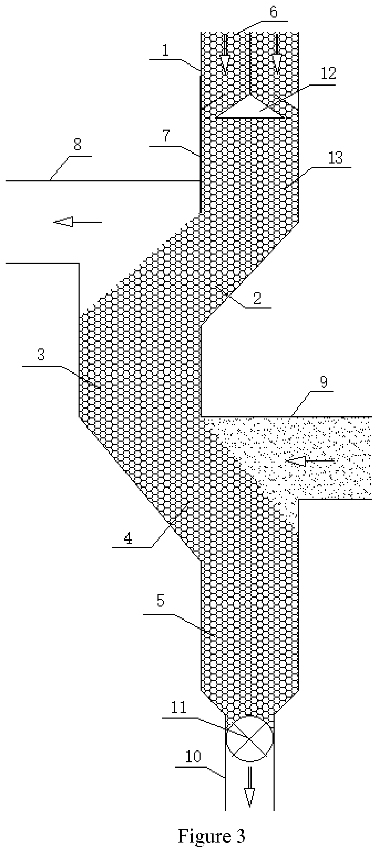

In this embodiment, the adjustment baffle can be moved up and down to adjust the accumulation thickness of the particle filtering layer in the granular bed to achieve different filtering efficiency and bed resistance, so as to adapt to different applications. Setting the baffle to adjust particle thickness can effectively adjust the thickness of filtering particles, as shown in Fig. 3, so as to ensure the filtering effect. The discharge valve can be continuously variable to adjust the moving velocity of filtering particles, to achieve optimal filtering efficiency and maximum capacity of handling dust gas. The dust gas flows through the particle filtering layer in the form of cross flow and adverse flow or in the form of cross flow and downstream flow, to achieve filtration and purification.

Different material filtering particles are used to adapt to different working temperatures, such as corundum, silicon carbide, silicon nitride, sand grains, quartz sand, ceramic balls, glass beads, molecular sieves, coal, metal, nonmetal, mung bean, soya bean and resin; different sizes of filtering particles are used to form different filling rates or porosity to adapt to different filtering situation, and the size range of filtering material particles is 0-100mm; the thickness of particle filtering layer can be adjusted by the adjustment baffle to design different filtering efficiency and bed resistance, and the thickness range of particle filtering layer is 1cm∼200cm.

The filtering particles are in a slow motion state, which can properly break the filtering cake formed by the dust in the particle layer, and reduce the resistance of bed and maintain the stable operation of the system in the premise of ensuring the filtering effect. The types of treated dust include but not limited to non-coagulative dust such as coal ash, carbon powder, pulverized coal, iron oxide powder, silica powder, inorganic nonmetal powder and so on, and coagulative dust such as resin powder, tar vapor, alkali metal vapor, molten metal, and submerged arc furnace smoke dust and so on.

While processing flue gas containing coagulative dust, a heat exchanger can be arranged within the continuous filtering system comprising a moving bed particle layer, the coagulative dust particles (such as tar and alkali metal steam) are coagulated into liquid or solid by controlling the temperature of the particle filtering layer 5, so that they are cohered to the non-coagulative dust particles mutually and adhered to the surface of the filtering material particles, to improve the filtering efficiency of the granular bed layer.

The interface of the dual repose angle self-configuring gas and particle (that is, the gas-particle interface of dust gas which begins to enter the particle filtering layer and the gas-particle interface of purified gas which finally leaves the particle filtering layer are both inclined interfaces) can effectively reduce the filtering velocity of the dust gas.

Wherein, the first filtering mouth for flue gas and the second filtering mouth for flue gas are correspondingly arranged at both sides of the sidewall of the first inclined filtering channel and the sidewall of the second inclined filtering channel; the central axis of the feeding channel is in the same line with the central axis of the aggregate channel, the central axis of the longitudinal filtering channel is not in the same line with the central axis of the feeding channel, and the feeding channel and the aggregate channel are arranged at the same side of the longitudinal filtering channel; the first filtering mouth for flue gas is an outlet for purified gas, and the second filtering mouth for flue gas is an inlet for flue gas.

The continuous filtering system comprising a moving bed particle layer with adjustable thickness of filtering layer provided in the embodiment of the disclosure is simple in structure, convenient in operation, adjustable in the thickness of the particle layer, having no such component as backstop, baffle, orifice plate, and suitable for the continuous filtering system and method comprising the moving bed particle layer with wide temperature range, high filtering efficiency, low filtering pressure and continuous stable operation.

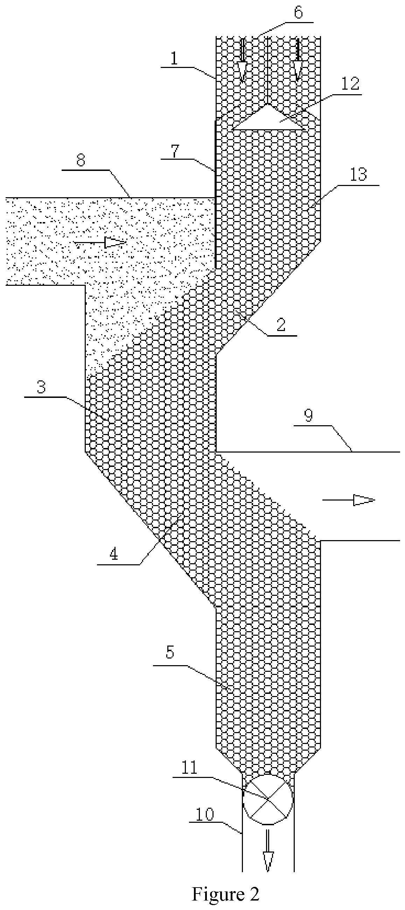

A continuous filtering system comprising a moving bed particle layer with adjustable thickness of filtering layer provided in the embodiment of the present disclosure is shown in Fig.2. In the longitudinal filtering channel, the flow direction of flue gas is the same as the flow direction of particles, while the flow direction of the flue gas is opposite to the flow direction of particles in Fig.1.

A continuous filtering system comprising a moving bed particle layer with adjustable thickness of filtering layer provided in the embodiment of the present disclosure is shown in Fig.3. Compared with Fig.1, the adjustment baffle is moved upwards, and the height of the longitudinal filtering channel (also known as the thickness of the filtering layer) is increased. The continuous filtering system comprising a moving bed particle layer with adjustable thickness of filtering layer includes: a feeding channel 1, a first inclined filtering channel 2, a longitudinal filtering channel 3, a second inclined filtering channel 4 and an aggregate channel 5; wherein the bottom of the feeding channel 1 is connected to the top of the first inclined filtering channel 2; the bottom of the first inclined filtering channel 2 is connected to the top of the longitudinal filtering channel 3; the bottom of the longitudinal filtering channel 3 is connected to the top of the second inclined filtering channel 4, and the bottom of the second inclined filtering channel 4 is connected to the top of the aggregate channel 5;
an inlet for filtering particles 6 is arranged at the top of the feeding channel 1, an baffle to adjust particle thickness 7 is arranged at the bottom of one side of the feeding channel 1 near the longitudinal filtering channel 3, a first filtering mouth for flue gas 8 and a second filtering mouth for flue gas 9 are correspondingly arranged at the sidewall of the first inclined filtering channel 2 and the sidewall of the second inclined filtering channel 4, a discharge channel 10 is arranged at the bottom of the aggregate channel 5, and a discharge valve 11 is arranged in the discharge channel 10;
the feeding channel 1, the first inclined filtering channel 2, the longitudinal filtering channel 3, the second inclined filtering channel 4 and the aggregate channel 5 are flowingly filled with filtering particles. Preferably, a charging bell 12 is arranged below the inlet for filtering particles 6.

Wherein, the first filtering mouth for flue gas and the second filtering mouth for flue gas are correspondingly arranged at both sides of the sidewall of the first inclined filtering channel and the sidewall of the second inclined filtering channel; the central axis of the feeding channel is in the same line with the central axis of the aggregate channel, the central axis of the longitudinal filtering channel is not in the same line with the central axis of the feeding channel, and the feeding channel and the aggregate channel are arranged at the same side of the longitudinal filtering channel; the first filtering mouth for flue gas is an inlet for flue gas, and the second filtering mouth for flue gas is an outlet for purified gas.

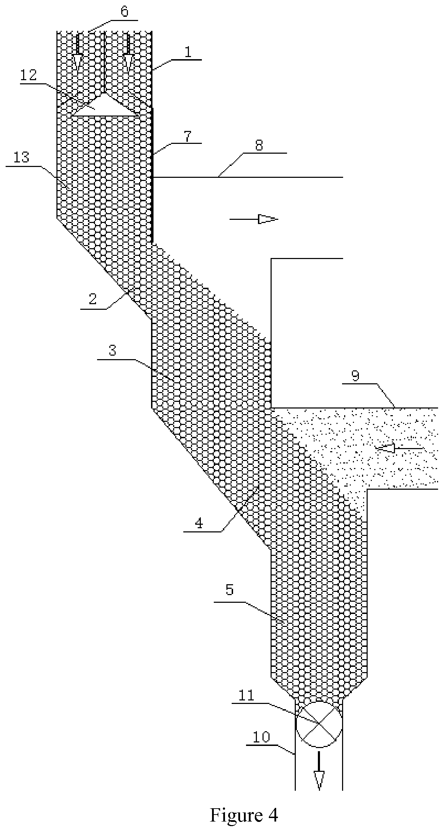

A continuous filtering system comprising a moving bed particle layer with adjustable thickness of filtering layer provided in the embodiment of the present disclosure is shown in Fig.4, which includes: a feeding channel 1, a first inclined filtering channel 2, a longitudinal filtering channel 3, a second inclined filtering channel 4 and an aggregate channel 5; wherein the bottom of the feeding channel 1 is connected to the top of the first inclined filtering channel 2; the bottom of the first inclined filtering channel 2 is connected to the top of the longitudinal filtering channel 3; the bottom of the longitudinal filtering channel 3 is connected to the top of the second inclined filtering channel 4, and the bottom of the second inclined filtering channel 4 is connected to the top of the aggregate channel 5;
an inlet for filtering particles 6 is arranged at the top of the feeding channel 1, a baffle to adjust particle thickness 7 is arranged at the bottom of one side of the feeding channel 1 near the longitudinal filtering channel 3, a first filtering mouth for flue gas 8 and a second filtering mouth for flue gas 9 are correspondingly arranged at the sidewall of the first inclined filtering channel 2 and the sidewall of the second inclined filtering channel 4, a discharge channel 10 is arranged at the bottom of the aggregate channel 5, and a discharge valve 11 is arranged in the discharge channel 10;
the feeding channel 1, the first inclined filtering channel 2, the longitudinal filtering channel 3, the second inclined filtering channel 4 and the aggregate channel 5 are flowingly filled with filtering particles 13. Preferably, a charging bell 12 is arranged below the inlet for filtering particles 6.

Wherein, the first filtering mouth for flue gas and the second filtering mouth for flue gas are correspondingly arranged at the same side of the sidewall of the first inclined filtering channel and the second inclined filtering channel. The central axis of the feeding channel, the central axis of the longitudinal filtering channel and the central axis of the aggregate channel are not in the same line. The feeding channel and the aggregate channel are arranged at both sides of the longitudinal filtering channel. The first inclined filtering channel and the second inclined filtering channel belong to the repose angle self-configuring gas-particle interface, which can reduce the filtering rate of dust gas. The first filtering mouth for flue gas 8 is an outlet for purified gas, and the second filtering mouth for flue gas 9 is an inlet for flue gas.

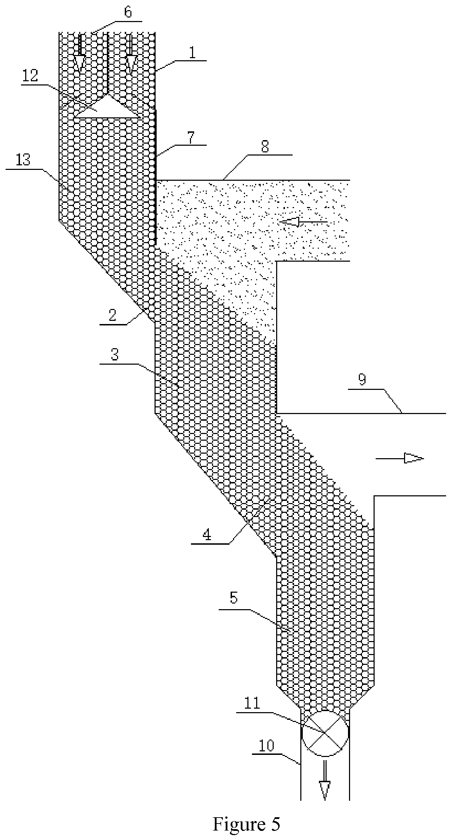

A continuous filtering system comprising a moving bed particle layer with adjustable thickness of filtering layer provided in the embodiment of the present disclosure is shown in Fig.5, which includes: a feeding channel 1, a first inclined filtering channel 2, a longitudinal filtering channel 3, a second inclined filtering channel 4 and an aggregate channel 5; wherein the bottom of the feeding channel 1 is connected to the top of the first inclined filtering channel 2; the bottom of the first inclined filtering channel 2 is connected to the top of the longitudinal filtering channel 3; the bottom of the longitudinal filtering channel 3 is connected to the top of the second inclined filtering channel 4, and the bottom of the second inclined filtering channel 4 is connected to the top of the aggregate channel 5;
an inlet for filtering particles 6 is arranged at the top of the feeding channel 1, a baffle to adjust particle thickness 7 is arranged at the bottom of one side of the feeding channel 1 near the longitudinal filtering channel 3, a first filtering mouth for flue gas 8 and a second filtering mouth for flue gas 9 are correspondingly arranged at the sidewall of the first inclined filtering channel 2 and the sidewall of the second inclined filtering channel 4, a discharge channel 10 is arranged at the bottom of the aggregate channel 5, and a discharge valve 11 is arranged in the discharge channel 10;
the feeding channel 1, the first inclined filtering channel 2, the longitudinal filtering channel 3, the second inclined filtering channel 4 and the aggregate channel 5 are flowingly filled with filtering particles 13. Preferably, a charging bell 12 is arranged below the inlet for filtering particles 6.

Wherein, the first filtering mouth for flue gas and the second filtering mouth for flue gas are correspondingly arranged at the same side of the sidewall of the first inclined filtering channel and the second inclined filtering channel. The central axis of the feeding channel, the central axis of the longitudinal filtering channel and the central axis of the aggregate channel are not in the same line. The feeding channel and the aggregate channel are arranged at both sides of the longitudinal filtering channel. The first filtering mouth for flue gas 8 is an inlet for flue gas, and the second filtering mouth for flue gas 9 is an outlet for purified gas.

The continuous filtering system comprising the moving bed particle layer with adjustable thickness of the filter layer is provided according to embodiments of the disclosure. After the filter particles discharged from the discharge channel and the dust collected through purifying are discharged out of the bed, the filter material particles and the dust collected through purification are separated by the filter material regeneration treatment (such as vibrating screen, drum sieve, fluidized bed, pulse air flow impact). Then the regenerated filter particles are transported back to the upper feed channel to realize the recycling of the filter particles; for coal-fired systems and coal gasification systems, if the coal is used as the filter particle, the filter particles and the collected dust are not subjected to regeneration, and can be recycled directly. For the cheap filter material particles or filter material particles difficult to regenerate, no recycling is needed after usage, in order to realize resource utilization.

The section sizes of the feeding channel and the discharge channel both are 100mm^{∗}100mm square structure, and the height are 200mm. The section size of the particle filtering layer in the longitudinal filtering channel is 200mm^{∗}200mm square structure and the adjustable range of the particle filtering layer is 50mm-300mm; the section size of the aggregate channel is 150mm^{∗}150mm square structure, and the height is 300mm; the section size of the inlet for dust gas and the section size of the outlet for purified gas are 200mm^{∗}200mm square structure; the complete device is made of organic glass; and the filtering particle is a corundum ball with a diameter of 1.5mm.

During the operation, the dust concentration in dust air is 2.6g/m³; the dust includes fly ash which has an average particle size of 40 µm, the flow rate of dust air is adjusted to 60m³/h, the filtering velocity in the particle layer is 0.4m/s, the thickness of the particle filtering layer is adjusted to 150mm, and the moving velocity of the filtering material particles is 3mm/min. In the initial stage, the filtering efficiency was 80%. 15min later from the start of the experiment, the filtering efficiency was 99.5% and the bed resistance was 200Pa. The filtering purification experiment kept running 2h, the operation of the device was stable, the filtering efficiency and the bed resistance remained basically unchanged. The experiment shows that the scheme has simple structure, convenient operation, adjustable thickness of particle layer, no need for backstop/perforated plate, high filtering efficiency, low filtering pressure, continuous stable operation, and such phenomena as saturation of filtering capacity and short circuit of local dust gas in the particle layer will not be presented.

## Claims

1. A continuous filtering system comprising a moving bed particle filtering layer with adjustable thickness of said filtering layer, comprising a feeding channel (1), a first inclined filtering channel (2), a longitudinal filtering channel (3), a second inclined filtering channel (4) and an aggregate channel (5), wherein the bottom of the feeding channel (1) is connected to the top of the first inclined filtering channel (2); the bottom of the first inclined filtering channel (2) is connected to the top of the longitudinal filtering channel (3); the bottom of the longitudinal filtering channel (3) is connected to the top of the second inclined filtering channel (4), and the bottom of the second inclined filtering channel (4) is connected to the top of the aggregate channel (5);
an inlet for filtering particles (6) is arranged at the top of the feeding channel (1), a baffle to adjust the filtering layer thickness is arranged at the bottom of one side of the feeding channel (1) near the longitudinal filtering channel (3), a first filtering mouth for flue gas (8) and a second filtering mouth (9) for flue gas are correspondingly arranged at the sidewall of the first inclined filtering channel (2) and the sidewall of the second inclined filtering channel (4), a discharge channel (10) is arranged at the bottom of the aggregate channel (5), and a discharge valve (11) is arranged within the discharge channel (10);
the feeding channel (1), the first inclined filtering channel (2), the longitudinal filtering channel (3), the second inclined filtering channel (4) and the aggregate channel (5) are flowingly filled with said filtering particles (13).

2. The continuous filtering system comprising a moving bed particle layer with adjustable thickness of filtering layer according to claim 1, wherein, a charging bell (12) is arranged below the inlet for filtering particles (6).

3. The continuous filtering system comprising a moving bed particle layer with adjustable thickness of filtering layer according to claim 1, wherein, the first filtering mouth for flue gas (8) and the second filtering mouth (9) for flue gas are correspondingly arranged at both sides of the sidewall of the first inclined filtering channel (2) and the sidewall of the second inclined filtering channel (4).

4. The continuous filtering system comprising a moving bed particle layer with adjustable thickness of filtering layer according to claim 3, wherein, the central axis of the feeding channel (1) and the central axis of the aggregate channel (5) are in a same line, the central axis of the longitudinal filtering channel (3) and the central axis of the feeding channel (1) are not in a same line, and the feeding channel (1) and the aggregate channel (5) are arranged at the same side of the longitudinal filtering channel (3).

5. The continuous filtering system comprising a moving bed particle layer with adjustable thickness of filtering layer according to claim 4, wherein, the adjustment baffle (7) is movable in an upward and downward direction to adjust the thickness of the filtering layer.

6. The continuous filtering system comprising a moving bed particle layer with adjustable thickness of filtering layer according to claim 1, wherein, the first filtering mouth for flue gas (8) and the second filtering mouth (9) for flue gas are correspondingly arranged at a same side of the sidewall of the first inclined filtering channel (2) and the sidewall of the second the inclined filtering channel.

7. The continuous filtering system comprising a moving bed particle layer with adjustable thickness of filtering layer according to claim 6, wherein, the central axis of the feeding channel (1), the central axis of the longitudinal filtering channel (3) and the central axis of the aggregate channel (5) are not in a same line, and the feeding channel (1) and the aggregate channel (5) are arranged at both sides of the longitudinal filtering channel (3).

8. The continuous filtering system comprising a moving bed particle layer with adjustable thickness of filtering layer according to any of claims 3 to 7, wherein, the first filtering mouth for flue gas (8) is an inlet for flue gas, and the second filtering mouth (9) for flue gas is an outlet for purified gas.

9. The continuous filtering system comprising a moving bed particle layer with adjustable thickness of filtering layer according to any of claims 3 to 7, wherein, the first filtering mouth for flue gas (8) is an outlet for purified gas, and the second filtering mouth (9) for flue gas is an inlet for flue gas.

## Patentansprüche

1. Kontinuierliches Filtersystem, umfassend eine Partikelfilterschicht mit einem beweglichen Bett und aufweisend eine einstellbare Dicke der Filterschicht, wobei die Filterschicht einen Zufuhrkanal (1), einen ersten geneigten Filterkanal (2), einen Längsfilterkanal (3), einen zweiten geneigten Filterkanal (4) und einen Aggregatkanal (5) umfasst, und wobei der Boden des Zufuhrkanals (1) mit der Spitze des ersten geneigten Filterkanals (2) verbunden ist; und wobei der Boden des ersten geneigten Filterkanals (2) mit der Spitze des Längsfilterkanals (3) verbunden ist; und wobei der Boden des Längsfilterkanals (3) mit der Spitze des zweiten geneigten Filterkanals (4) verbunden ist, und wobei der Boden des zweiten geneigten Filterkanals (4) mit der Spitze des Aggregatkanals (5) verbunden ist;
und wobei ein Einlass zum Filtern von Partikeln (6) an der Spitze des Zufuhrkanals (1) angeordnet ist, und wobei eine Schwallwand zum Einstellen der Dicke der Filterschicht an dem Boden einer Seite des Zufuhrkanals (1) in der Nähe des Längsfilterkanals (3) angeordnet ist, und wobei eine erste Filtermündung für Rauchgas (8) und eine zweite Filtermündung für Rauchgas (9) entsprechend an der Seitenwand des ersten geneigten Filterkanals (2) und der Seitenwand des zweiten geneigten Filterkanals (4) angeordnet sind, und wobei ein Auslasskanal (10) an dem Boden des Aggregatkanals (5) angeordnet ist, und wobei ein Auslassventil (11) innerhalb des Auslasskanals (10) angeordnet ist;
und wobei der Zufuhrkanal (1), der erste geneigte Filterkanal (2), der Längsfilterkanal (3), der zweite geneigte Filterkanal (4) und der Aggregatkanal (5) fließend mit den Filterpartikeln (13) gefüllt sind.

2. Kontinuierliches Filtersystem, umfassend eine Partikelschicht mit einem beweglichen Bett und aufweisend eine einstellbare Dicke der Filterschicht nach Anspruch 1, wobei eine Ladeglocke (12) unterhalb des Einlasses zum Filtern von Partikeln (6) angeordnet ist.

3. Kontinuierliches Filtersystem, umfassend eine Partikelschicht mit einem beweglichen Bett und aufweisend eine einstellbare Dicke der Filterschicht nach Anspruch 1, wobei die erste Filtermündung für Rauchgas (8) und die zweite Filtermündung für Rauchgas (9) entsprechend auf beiden Seiten der Seitenwand des ersten geneigten Filterkanals (2) und der Seitenwand des zweiten geneigten Filterkanals (4) angeordnet sind.

4. Kontinuierliches Filtersystem, umfassend eine Partikelschicht mit einem beweglichen Bett und aufweisend eine einstellbare Dicke der Filterschicht nach Anspruch 3, wobei sich die Mittelachse des Zufuhrkanals (1) und die Mittelachse des Aggregatkanals (5) in derselben Linie befinden, und wobei sich die Mittelachse des Längsfilterkanals (3) und die Mittelachse des Zufuhrkanals (1) nicht in derselben Linie befinden, und wobei der Zufuhrkanal (1) und der Aggregatkanal (5) auf derselben Seite des Längsfilterkanals (3) angeordnet sind.

5. Kontinuierliches Filtersystem, umfassend eine Partikelschicht mit einem beweglichen Bett und aufweisend eine einstellbare Dicke der Filterschicht nach Anspruch 4, wobei die Einstellschwallwand (7) in einer Aufwärts- und Abwärtsrichtung beweglich ist, um die Dicke der Filterschicht einzustellen.

6. Kontinuierliches Filtersystem, umfassend eine Partikelschicht mit einem beweglichen Bett und aufweisend eine einstellbare Dicke der Filterschicht nach Anspruch 1, wobei die erste Filtermündung für Rauchgas (8) und die zweite Filtermündung (9) für Rauchgas entsprechend auf derselben Seite der Seitenwand des ersten geneigten Filterkanals (2) und der Seitenwand des zweiten geneigten Filterkanals angeordnet sind.

7. Kontinuierliches Filtersystem, umfassend eine Partikelschicht mit einem beweglichen Bett und aufweisend eine einstellbare Dicke der Filterschicht nach Anspruch 6, wobei sich die Mittelachse des Zufuhrkanals (1), die Mittelachse des Längsfilterkanals (3) und die Mittelachse des Aggregatkanals (5) nicht in derselben Linie befinden, und wobei der Zufuhrkanal (1) und der Aggregatkanal (5) auf beiden Seiten des Längsfilterkanals (3) angeordnet sind.

8. Kontinuierliches Filtersystem, umfassend eine Partikelschicht mit einem beweglichen Bett und aufweisend eine einstellbare Dicke der Filterschicht nach einem der Ansprüche 3 bis 7, wobei es sich bei der ersten Filtermündung für Rauchgas (8) um einen Einlass für Rauchgas und bei der zweiten Filtermündung für Rauchgas (9) um einen Auslass für gereinigtes Gas handelt.

9. Kontinuierliches Filtersystem, umfassend eine Partikelschicht mit einem beweglichen Bett und aufweisend eine einstellbare Dicke der Filterschicht nach einem der Ansprüche 3 bis 7, wobei es sich bei der ersten Filtermündung für Rauchgas (8) um einen Auslass für gereinigtes Gas und bei der zweiten Filtermündung für Rauchgas (9) um einen Einlass für Rauchgas handelt.

## Revendications

1. Système de filtrage continu comprenant une couche filtrante de particules à lit mobile avec une épaisseur réglable de ladite couche filtrante, comprenant un canal d'alimentation (1), un premier canal de filtrage incliné (2), un canal de filtrage longitudinal (3), un deuxième canal de filtrage incliné (4) et un canal d'agrégat (5), dans lequel le bas du canal d'alimentation (1) est raccordé au haut du premier canal de filtrage incliné (2); le bas du premier canal de filtrage incliné (2) est relié au haut du canal de filtrage longitudinal (3); le bas du canal de filtrage longitudinal (3) est raccordé au haut du deuxième canal de filtrage incliné (4), et le bas du second canal de filtrage incliné (4) est raccordé au haut du canal d'agrégat (5);
une entrée pour filtrer les particules (6) est disposée en haut du canal d'alimentation (1), un déflecteur pour régler l'épaisseur de la couche filtrante est disposé en bas d'un côté du canal d'alimentation (1) près du canal de filtrage longitudinal (3), une première bouche de filtrage pour le gaz de combustion (8) et une seconde bouche de filtrage (9) pour le gaz de combustion sont disposées de manière correspondante sur la paroi latérale du premier canal de filtrage incliné (2) et sur la paroi latérale du second canal de filtrage incliné (4), un canal de décharge (10) est disposé en bas du canal d'agrégat (5), et une soupape de décharge (11) est disposée à l'intérieur du canal de décharge (10);
le canal d'alimentation (1), le premier canal de filtrage incliné (2), le canal de filtrage longitudinal (3), le deuxième canal de filtrage incliné (4) et le canal d'agrégat (5) sont remplis de manière fluide desdites particules filtrantes (13).

2. Système de filtrage continu comprenant une couche de particules à lit mobile avec une épaisseur réglable de couche filtrante selon la revendication 1, dans lequel, une cloche de chargement (12) est disposée en dessous de l'entrée pour filtrer les particules (6).

3. Système de filtrage continu comprenant une couche de particules à lit mobile avec une épaisseur réglable de couche filtrante selon la revendication 1, dans lequel, la première bouche de filtrage pour le gaz de combustion (8) et la seconde bouche de filtrage (9) pour le gaz de combustion sont disposées de manière correspondante de part à part de la paroi latérale du premier canal de filtrage incliné (2) et la paroi latérale du second canal de filtrage incliné (4).

4. Système de filtrage continu comprenant une couche de particules à lit mobile avec une épaisseur réglable de couche filtrante selon la revendication 3, dans lequel, l'axe central du canal d'alimentation (1) et l'axe central du canal d'agrégat (5) sont dans un même ligne, l'axe central du canal de filtrage longitudinal (3) et l'axe central du canal d'alimentation (1) ne sont pas sur une même ligne, et le canal d'alimentation (1) et le canal d'agrégat (5) sont disposés à un même côté du canal de filtrage longitudinal (3).

5. Système de filtrage continu comprenant une couche de particules à lit mobile avec une épaisseur réglable de couche filtrante selon la revendication 4, dans lequel le déflecteur d'ajustement (7) est mobile dans une direction ascendante et descendante pour ajuster l'épaisseur de la couche filtrante.

6. Système de filtrage continu comprenant une couche de particules à lit mobile avec une épaisseur réglable de couche filtrante selon la revendication 1, dans lequel, la première bouche de filtrage pour le gaz de combustion (8) et la deuxième bouche de filtrage (9) pour le gaz de combustion sont disposées de manière correspondante à un même côté de la paroi latérale du premier canal de filtrage incliné (2) et la paroi latérale du second canal de filtrage incliné.

7. Système de filtrage continu comprenant une couche de particules à lit mobile avec une épaisseur réglable de couche filtrante selon la revendication 6, dans lequel, l'axe central du canal d'alimentation (1), l'axe central du canal de filtrage longitudinal (3) et l'axe central du canal d'agrégat (5) ne sont pas sur une même ligne, et le canal d'alimentation (1) et le canal d'agrégat (5) sont disposés de part à part du canal de filtrage longitudinal (3).

8. Système de filtrage continu comprenant une couche de particules à lit mobile avec une épaisseur réglable de couche filtrante selon l'une quelconque des revendications 3 à 7, dans lequel, la première bouche de filtrage pour le gaz de combustion (8) est une entrée pour le gaz de combustion, et le deuxième bouche de filtrage (9) pour le gaz de combustion est une sortie pour le gaz purifié.

9. Système de filtrage continu comprenant une couche de particules à lit mobile avec une épaisseur réglable de couche filtrante selon l'une quelconque des revendications 3 à 7, dans lequel la première bouche de filtrage pour le gaz de combustion (8) est une sortie pour le gaz purifié, et le deuxième filtrage la bouche (9) pour le gaz de combustion est une entrée pour le gaz de combustion.
